# FASCICULE DE BREVET EUROPEEN

(11) **EP 1 975 374 B1**
(45) Date de publication et mention de la délivrance du brevet: **30.05.2012**
(21) Numéro de dépôt: 08151441.6
(22) Date de dépôt: 14.02.2008
(51) Int. Cl.: F01D 9/04, F01D 11/00, F01D 11/12

(54) **Enveloppe externe étanche pour une roue de turbine de turbomachine**
Dichte Außenhülle eines Turbinenrads einer Strömungsmaschine
External casing for a turbomachine turbine wheel

(30) Priorité: 30.03.2007 FR 0702331
(43) Date de publication de la demande: 01.10.2008
(73) Titulaire: SNECMA, 75015 Paris (FR)
(72) Inventeur: Castel, André, Camille, Louis, 91090, Lisses (FR); Heurtel, Bertrand, Jean, Joseph, Marie, 77240, Vert St Denis (FR); Imbourg, Sébastien, Alain, 91330, Yerres (FR); Leutard, Florence, Irène, Noëlle, 77210, Samoreau (FR); Vieillefond, Guy, 91390, Morsang sur Orge (FR)
(74) Mandataire: Ramey, Daniel

(56) Documents cités:
- EP-A- 0 924 387
- EP-A- 1 229 213
- US-A- 4 247 248

## Description

La présente invention concerne une enveloppe externe étanche pour une roue de turbine d'une turbomachine telle qu'un turboréacteur ou un turbopropulseur d'avion.

Une turbine de turbomachine comprend plusieurs étages comportant chacun un distributeur formé d'une rangée annulaire d'aubes fixes portées par un carter de la turbine, et une roue montée rotative en aval du distributeur dans une enveloppe cylindrique ou tronconique formée par des secteurs d'anneau qui sont disposés circonférentiellement bout à bout et qui sont accrochés sur le carter de la turbine.

Chaque secteur d'anneau comprend une plaque à orientation circonférentielle qui porte un bloc de matière abradable fixé sur la surface interne de la plaque. Ce bloc est par exemple du type en nid d'abeilles et est destiné à s'user par frottement sur la périphérie externe de la roue pour minimiser les jeux radiaux entre la roue et les secteurs d'anneau.

Dans la technique actuelle, l'étanchéité entre les secteurs d'anneau est réalisée au moyen de lamelles d'étanchéité rapportées et fixées entre les secteurs d'anneau. Chaque lamelle est engagée à l'une de ses extrémités dans une première rainure formée sur un bord longitudinal d'une plaque d'un secteur d'anneau, et à l'autre de ses extrémités dans une seconde rainure formée sur un bord longitudinal de la plaque d'un secteur d'anneau adjacent, ces première et seconde rainures étant en vis-à-vis l'une de l'autre.

Cependant, ces lamelles ne procurent pas une étanchéité parfaite entre les secteurs d'anneau car elles s'étendent sur une partie seulement de la dimension axiale des secteurs d'anneau. Les fuites de gaz chauds venant de la veine de la turbine se traduisent par une diminution des performances de la turbine, et peuvent faire monter la température du carter de la turbine et provoquer la formation de criques ou de fissures sur ce carter.

Par ailleurs, la plaque doit avoir une épaisseur suffisante, en particulier au niveau de ses bords longitudinaux, pour pouvoir usiner les rainures de logement des lamelles d'étanchéité, ce qui entraîne une augmentation de la masse des secteurs d'anneau et de la turbomachine, toujours préjudiciable en aéronautique.

De plus, le procédé d'usinage des rainures sur les plaques des secteurs d'anneau est coûteux et complexe à mettre en oeuvre, et peut endommager les secteurs d'anneau. Enfin, les lamelles d'étanchéité sont chères et leur montage dans les rainures des secteurs d'anneau nécessite un temps relativement long.

Une enveloppe externe selon l'art antérieur est connue par le document US 4247248.

L'invention a notamment pour but d'apporter une solution simple, efficace et économique à ces problèmes.

Elle propose à cet effet une enveloppe externe pour une roue de turbine de turbomachine, cette enveloppe étant sensiblement cylindrique et formée de secteurs d'anneau disposés circonférentiellement bout à bout, chaque secteur d'anneau comprenant une plaque à orientation circonférentielle portant un bloc de matière abradable fixé sur la surface interne de la plaque, caractérisée en ce que la dimension circonférentielle de la plaque de chaque secteur d'anneau est sensiblement identique à celle du bloc de matière abradable porté par cette plaque, et en ce que la plaque et le bloc de chaque secteur d'anneau sont décalés l'un par rapport à l'autre en direction circonférentielle, de sorte qu'une partie d'extrémité circonférentielle de la plaque de chaque secteur d'anneau recouvre une partie d'extrémité correspondante du bloc d'un secteur d'anneau adjacent, et ce sur toute la dimension axiale du secteur d'anneau.

Selon l'invention, la plaque et le bloc de matière abradable de chaque secteur d'anneau ne sont pas alignés radialement l'un avec l'autre, mais sont au contraire décalés circonférentiellement l'un par rapport à l'autre. Ce décalage circonférentiel se traduit par un recouvrement mutuel de deux secteurs d'anneau adjacents ce qui permet d'assurer une bonne étanchéité entre les secteurs d'anneau et ce sur toute leur dimension axiale. Les secteurs d'anneau assurent à eux seuls l'étanchéité de l'enveloppe externe et il n'est donc plus nécessaire de rapporter des pièces supplémentaires telles que des lamelles sur l'enveloppe pour assurer l'étanchéité de cette dernière. La partie d'extrémité circonférentielle de la plaque d'un premier secteur d'anneau est séparée par un faible jeu circonférentiel de la plaque d'un second secteur d'anneau adjacent, et recouvre un bloc de matière abradable de ce second secteur d'anneau, en étant séparé de ce bloc par un faible jeu radial. Ces jeux sont déterminés pour autoriser des dilatations thermiques des secteurs d'anneau en direction radiale et circonférentielle, lors du fonctionnement de la turbine.

La plaque et le bloc de chaque secteur d'anneau peuvent être décalés circonférentiellement l'un par rapport à l'autre d'un angle α inférieur à 2° environ, mesuré autour de l'axe longitudinal de la turbine. La partie d'extrémité précitée de la plaque de chaque secteur d'anneau peut recouvrir la partie d'extrémité correspondante du bloc d'un secteur d'anneau adjacent sur une distance circonférentielle inférieure à 10mm environ.

Selon une autre caractéristique de l'invention, le bloc de matière abradable de chaque secteur d'anneau est porté par une tôle à orientation circonférentielle qui est fixée, par exemple par brasage, sur la surface interne de la plaque du secteur d'anneau. Le bloc de matière abradable est préalablement fixé sur la tôle qui est elle-même fixée, par exemple par brasage, sur la face interne de la plaque du secteur d'anneau. Ceci permet de s'assurer du positionnement correct du bloc de matière abradable sur la plaque, et de faciliter le remplacement du bloc en cas d'usure importante de celui-ci. La tôle a par exemple une épaisseur ou dimension radiale inférieure à 1mm environ.

L'invention concerne également une turbine de turbomachine, comprenant des roues de rotor, caractérisée en ce qu'au moins une de ces roues est entourée par une enveloppe externe telle que décrite précédemment. L'invention concerne enfin une turbomachine, telle qu'un turboréacteur ou un turbopropulseur d'avion, caractérisée en ce qu'elle comprend une turbine de ce type.

L'invention sera mieux comprise et d'autres caractéristiques, détails et avantages de celle-ci apparaîtront plus clairement à la lecture de la description qui suit, faite à titre d'exemple non limitatif, et en référence aux dessins annexés dans lesquels :
- la figure 1 est une vue schématique partielle en coupe axiale d'une turbine de turbomachine ;
- la figure 2 est une vue schématique d'un secteur d'anneau d'une enveloppe externe selon la technique antérieure, vu de côté ;
- la figure 3 est une vue schématique d'un secteur d'anneau d'une enveloppe externe selon l'invention, vu de côté ;
- la figure 4 est une autre vue schématique du secteur d'anneau selon l'invention, vu de dessus ;
- la figure 5 est une vue en coupe selon la ligne V-V de la figure 4.

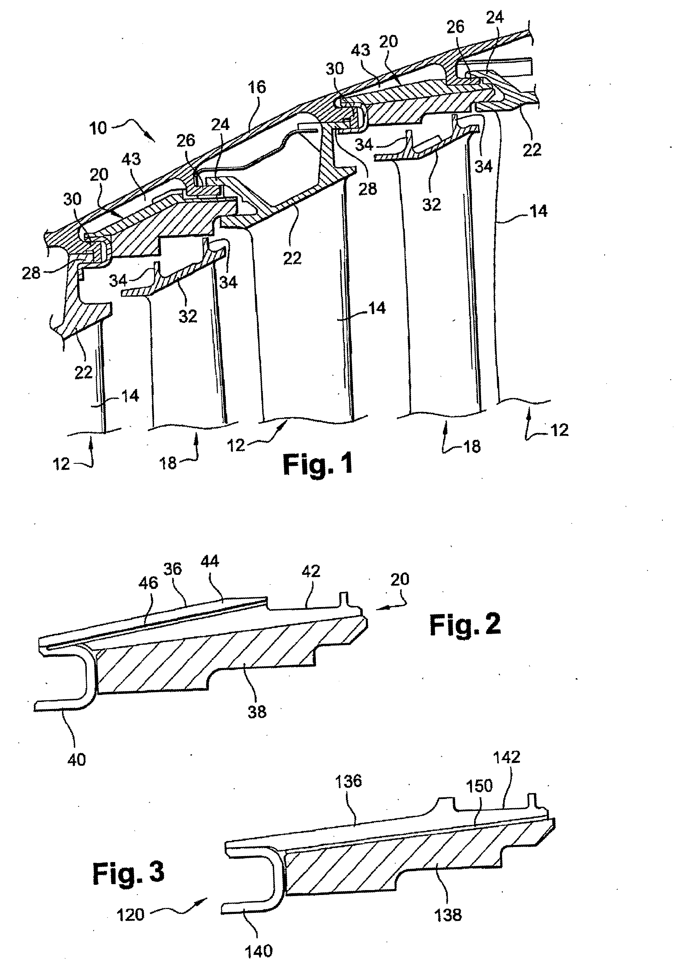

La turbine 10 partiellement représentée en figure 1 comprend plusieurs étages comportant chacun un distributeur 12 formé d'une rangée annulaire d'aubes fixes 14 portées par un carter 16 de la turbine, et une roue 18 montée en aval du distributeur 12 et tournant dans une enveloppe sensiblement cylindrique formée par des secteurs d'anneau 20 disposés circonférentiellement bout à bout et portés par le carter 16 de la turbine.

Chaque distributeur 12 comprend des parois de révolution externe 22 et interne (non visible) qui délimitent entre elles la veine annulaire d'écoulement des gaz dans la turbine et entre lesquelles s'étendent radialement les aubes 14. La paroi externe du distributeur comprend à son extrémité amont un rebord cylindrique externe 24 orienté vers l'amont et monté sur un rail annulaire 26 du carter, et à son extrémité aval un rebord cylindrique externe 28 orienté vers l'aval et maintenu radialement contre un rail annulaire 30 du carter.

Les roues 18 sont portées par un arbre de turbine (non représenté). Elles comprennent chacune des viroles externe 32 et interne (non visible), la virole externe 32 de chaque roue comprenant des nervures annulaires externes 34 entourées extérieurement avec un faible jeu radial par les secteurs d'anneau 20.

Chaque secteur d'anneau 20, mieux visible en figure 2, comprend une paroi 36 à orientation circonférentielle et un bloc 38 de matière abradable fixé par exemple par brasage sur la surface radialement interne de la paroi 36, ce bloc 38 étant du type en nid d'abeilles et étant destiné à s'user par frottement sur les nervures 34 de la roue 18 pour minimiser les jeux radiaux entre la roue et les secteurs d'anneau 20.

Les extrémités aval des secteurs d'anneau 20 sont logées dans un espace annulaire délimité par l'extrémité amont de la paroi externe 22 du distributeur 12 situé en aval des secteurs d'anneau, d'une part, et par le rail 26 du carter sur lequel est accroché le rebord amont 24 de ce distributeur, d'autre part. Les parois 36 des secteurs d'anneau définissent en outre à leurs extrémités aval une gorge annulaire 42 débouchant radialement vers l'extérieur et dans laquelle est monté ajusté le rail de carter 26.

Chaque secteur d'anneau 20 comprend également à son extrémité amont un organe d'accrochage 40 à orientation circonférentielle et à section en C dont l'ouverture est orientée vers l'amont. Cet organe 40 est fixé par exemple par brasage sur la surface interne du secteur d'anneau 20, en amont du bloc de matière abradable 38, et est engagé depuis l'aval sur le rebord cylindrique aval 30 du distributeur 12 situé en amont des secteurs d'anneau, et sur le rail de carter 28 sur lequel est monté ce rebord cylindrique 28, afin de maintenir le rebord 28 et le rail de carter 30 radialement serrés l'un contre l'autre.

Il est important d'assurer une étanchéité parfaite entre les secteurs d'anneau 20 pour empêcher les fuites de gaz chauds s'écoulant dans la turbine, radialement de l'intérieur vers l'extérieur, dans l'enceinte annulaire 43 délimitée par les secteurs d'anneau 20 et le carter 16 de la turbine. Ces fuites de gaz entraînent en effet une diminution des performances de la turbine et de la turbomachine, et peuvent faire monter la température du carter 16 et provoquer la formation de criques ou de fissures sur les rails de carter 26, 30, susceptibles de les détruire.

Dans la technique actuelle, l'étanchéité entre les secteurs d'anneau 20 est réalisée au moyen de lamelles d'étanchéité (non représentées) qui sont emboîtées dans des rainures 46 formées sur les bords longitudinaux 44 de la plaque de chaque secteur d'anneau. Chaque lamelle s'étend entre deux secteurs d'anneau adjacents. Une des extrémités de la lamelle est engagée dans une rainure rectiligne 46 formée sur un bord longitudinal 44 de la plaque d'un premier secteur d'anneau, et l'autre de ses extrémités est engagée dans une rainure correspondante formée sur un bord longitudinal de la plaque d'un autre second secteur d'anneau, ces rainures 46 étant situées en vis-à-vis l'une de l'autre.

Dans l'exemple représenté en figure 2, cette rainure 46 s'étend sur une partie seulement de la dimension axiale du secteur d'anneau 20. Les lamelles d'étanchéité n'assurent donc pas une étanchéité sur toute la dimension axiale des secteurs d'anneau. De plus, la plaque 36 doit avoir une épaisseur suffisante pour pouvoir usiner les rainures 46, ce qui entraîne une augmentation sensible de la masse totale de l'enveloppe externe. Enfin, les lamelles sont coûteuses à réaliser et leur montage entre les secteurs d'anneau 20 nécessite un temps relativement long.

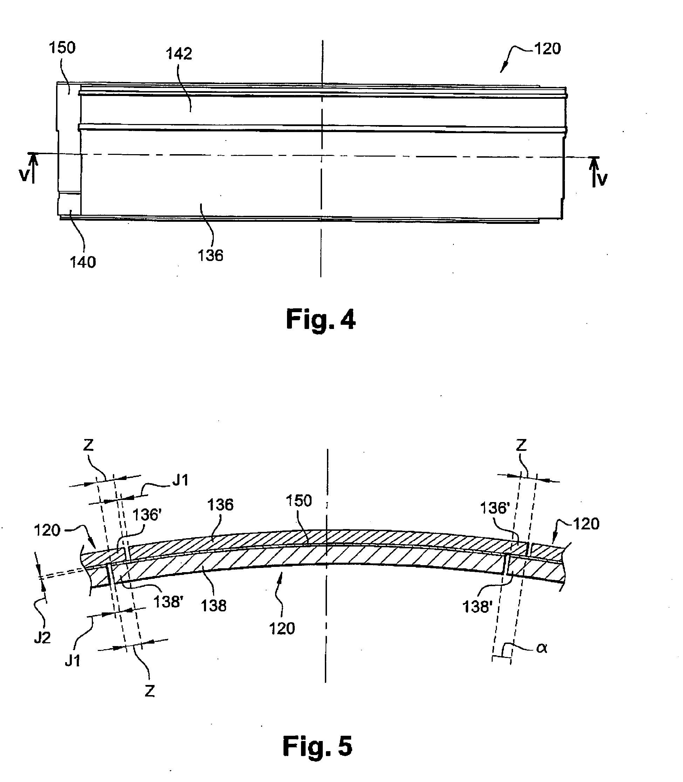

L'invention permet de remédier à l'ensemble de ces problèmes grâce au décalage en direction circonférentielle de la plaque et du bloc de matière abradable de chaque secteur d'anneau, l'étanchéité entre deux secteurs d'anneau adjacents résultant d'un effet de chicane provoqué par le recouvrement mutuel de ces secteurs d'anneau (figures 3 à 5).

Comme dans la technique antérieure, chaque secteur d'anneau 120 comprend une paroi à orientation circonférentielle 136, un bloc de matière abradable 138 et un organe d'accrochage 140 à section en C.

La paroi 136 du secteur d'anneau selon l'invention diffère de la technique antérieure en ce que son épaisseur ou dimension radiale est nettement plus faible car il n'est plus nécessaire de prévoir une surépaisseur de matière au niveau des bords longitudinaux de la plaque pour pouvoir y usiner des rainures.

A titre d'exemple, pour une enveloppe externe d'un mètre de diamètre environ et composée de vingt secteurs d'anneau, la diminution de l'épaisseur des plaques 136 des secteurs d'anneau 120 selon l'invention permet de réduire de 500 grammes environ la masse totale de cette enveloppe.

L'organe d'accrochage 140 est sensiblement identique à celui de la figure 2.

Le bloc de matière abradable 138 est porté par une tôle 150 à orientation circonférentielle qui est fixée par brasage sur la surface interne de la plaque 136 du secteur d'anneau. La tôle a un rayon de courbure sensiblement identique à celui de la plaque, et a une épaisseur relativement faible qui est par exemple inférieure à 1mm environ. Le bloc de matière abradable 138, la tôle 150 et la plaque 136 de chaque secteur d'anneau ont sensiblement la même dimension circonférentielle, et la tôle et le bloc ont en outre des dimensions axiales très proches l'une de l'autre.

Les secteurs d'anneau 120 sont séparés les uns des autres par un faible jeu circonférentiel J1 qui autorise des dilatations thermiques des secteurs d'anneau en direction circonférentielle, pendant le fonctionnement de la turbine.

La plaque 136 de chaque secteur d'anneau 120 est décalée circonférentiellement du bloc de matière abradable 138 de ce secteur d'anneau d'un angle α, mesuré autour de l'axe longitudinal de la turbine, cet angle étant inférieur à 2° et ayant par exemple une valeur de 1° environ. La partie d'extrémité circonférentielle libre 136' de chaque plaque recouvre la partie d'extrémité libre 138' correspondante du bloc de matière abradable d'un secteur d'anneau adjacent, et est séparée de ce bloc par un faible jeu radial J2 de façon à autoriser des dilatations thermiques radiales des secteurs d'anneau.

Dans un exemple particulier de réalisation de l'invention, les secteurs d'anneau forment une enveloppe externe d'un mètre environ de diamètre et ont chacun une dimension circonférentielle d'environ 15cm. La zone de recouvrement mutuel Z de deux secteurs d'anneau 120 adjacents a une dimension circonférentielle inférieure à 10mm environ, et une dimension axiale sensiblement égale à celle des secteurs d'anneau qui est de l'ordre de 4cm environ.

## Revendications

1. Enveloppe externe pour une roue de turbine (18) de turbomachine, cette enveloppe étant sensiblement cylindrique et formée de secteurs d'anneau (120) disposés circonférentiellement bout à bout, chaque secteur d'anneau comprenant une plaque (136) à orientation circonférentielle portant un bloc (138) de matière abradable fixé sur la surface interne de la plaque, **caractérisée en ce que** la dimension circonférentielle de la plaque de chaque secteur d'anneau est sensiblement identique à celle du bloc de matière abradable porté par cette plaque, et **en ce que** la plaque et le bloc de chaque secteur d'anneau sont décalés l'un par rapport à l'autre en direction circonférentielle, de sorte qu'une partie d'extrémité circonférentielle de la plaque de chaque secteur d'anneau recouvre une partie d'extrémité correspondante du bloc d'un secteur d'anneau adjacent, et ce sur toute la dimension axiale du secteur d'anneau.

2. Enveloppe externe selon la revendication 1, **caractérisée en ce que** la plaque (136) et le bloc (138) de chaque secteur d'anneau (120) sont décalés circonférentiellement l'un par rapport à l'autre d'un angle α inférieur à 2° environ.

3. Enveloppe externe selon la revendication 1 ou 2, **caractérisée en ce que** la partie d'extrémité circonférentielle de la plaque (136) de chaque secteur d'anneau (120) recouvre la partie d'extrémité correspondante du bloc (138) d'un secteur d'anneau adjacent sur une distance circonférentielle inférieure à 10mm environ.

4. Enveloppe externe selon l'une des revendications précédentes, **caractérisée en ce que** la partie d'extrémité circonférentielle de la plaque (136) de chaque secteur d'anneau (120) est séparée par un faible jeu radial (J2) de la partie d'extrémité correspondante du bloc (138) d'un secteur d'anneau adjacent.

5. Enveloppe externe selon l'une des revendications précédentes, **caractérisée en ce que** le bloc (138) de matière abradable de chaque
secteur d'anneau (120) est porté par une tôle (150) à orientation circonférentielle qui est fixée, par exemple par brasage, sur la surface interne de la plaque (136) du secteur d'anneau.

6. Enveloppe externe selon la revendication 5, **caractérisée en ce que** la tôle (150) a une épaisseur ou dimension radiale inférieure à 1mm environ.

7. Turbine de turbomachine, comprenant des roues de rotor (18), **caractérisée en ce qu'**au moins une de ces roues de rotor est entourée par une enveloppe externe selon l'une des revendications 1 à 6.

8. Turbomachine, telle qu'un turboréacteur ou un turbopropulseur d'avion, **caractérisée en ce qu'**elle comprend une turbine (10) selon la revendication 7.

## Claims

1. An external shroud for a turbomachine turbine wheel (18), this shroud being substantially cylindrical and formed of ring sectors (120) positioned circumferentially end to end, each ring sector comprising a circumferentially directed plate (136) bearing a block (138) of abradable material fixed to the internal surface of the plate, **characterized in that** the circumferential dimension of the plate of each ring sector is substantially identical to that of the block of abradable material borne by this plate, and **in that** the plate and the block of each ring sector are offset one with respect to the other in the circumferential direction so that a circumferential end part of the plate of each ring sector overlaps a corresponding end part of the block of an adjacent ring sector, this being so over the entire axial dimension of the ring sector.

2. The external shroud as claimed in claim 1, **characterized in that** the plate (136) and the block (138) of each ring sector (120) are circumferentially offset one with respect to the other by an angle α smaller than about 2°.

3. The external shroud as claimed in claim 1 or 2, **characterized in that** the circumferential end part of the plate (136) of each ring sector (120) overlaps the corresponding end part of the block (138) of an adjacent ring sector over a circumferential distance smaller than about 10 mm.

4. The external shroud as claimed in one of the preceding claims, **characterized in that** the circumferential end part of the plate (136) of each ring sector (120) is separated by a small radial clearance (J2) from the corresponding end part of the block (138) of an adjacent ring sector.

5. The external shroud as claimed in one of the preceding claims, **characterized in that** the block (138) of abradable material of each ring sector (120) is borne by a circumferentially directed sheet (150) which is fixed, for example, by brazing, to the internal surface of the plate (136) of the ring sector.

6. The external shroud as claimed in claim 5, **characterized in that** the sheet (150) has a thickness or radial dimension smaller than about 1 mm.

7. A turbomachine turbine comprising rotor wheels (18), **characterized in that** at least one of these rotor wheels is surrounded by an external shroud as claimed in one of claims 1 to 6.

8. A turbomachine such as an airplane turbojet or turboprop engine, and which comprises a turbine (10) as claimed in claim 7.

## Patentansprüche

1. Außenmantel für ein Turbinenrad (18) einer Turbomaschine, wobei dieser Mantel im wesentlichen zylindrisch und aus Ringsektoren (120) gebildet ist, die in Umfangsrichtung stumpf aneinanderstoßend angeordnet sind, wobei jeder Ringsektor eine in Umfangsrichtung ausgerichtete Platte (136) aufweist, die einen Block (138) aus einem Abriebmaterial trägt, der an die Innenfläche der Platte befestigt ist, **dadurch gekennzeichnet, dass** die Umfangsabmessung der Platte eines jeden Ringsektors im wesentlichen identisch zu der des von dieser Platte getragenen Blocks aus Abriebmaterial ist und dass die Platte und der Block eines jeden Ringsektors in Umfangsrichtung gegeneinander versetzt sind, so dass ein Umfangsendabschnitt der Platte eines jeden Ringsektors einen entsprechenden Endabschnitt des Blocks eines angrenzenden Ringsektors überdeckt, und zwar über die gesamte axiale Abmessung des Ringsektors.

2. Außenmantel nach Anspruch 1, **dadurch gekennzeichnet, dass** die Platte (136) und der Block (138) eines jeden Ringsektors (120) in Umfangsrichtung um einen Winkel α kleiner als etwa 2° gegeneinander versetzt sind.

3. Außenmantel nach Anspruch 1 oder 2, **dadurch gekennzeichnet, dass** der Umfangsendabschnitt der Platte (136) eines jeden Ringsektors (120) den entsprechenden Endabschnitt des Blocks (138) eines angrenzenden Ringsektors über ein Umfangsmaß kleiner als etwa 10 mm überdeckt.

4. Außenmantel nach einem der vorangehenden Ansprüche, **dadurch gekennzeichnet, dass** der Umfangsendabschnitt der Platte (136) eines jeden Ringsektors (120) durch ein geringes radiales Spiel (J2) vom entsprechenden Endabschnitt des Blocks (138) eines angrenzenden Ringsektors getrennt ist.

5. Außenmantel nach einem der vorangehenden Ansprüche, **dadurch gekennzeichnet, dass** der Block (138) aus Abriebmaterial eines jeden Ringsektors (120) von einem in Umfangsrichtung ausgerichteten Blech (150) getragen wird, das beispielsweise durch Anschweißen an die Innenfläche der Platte (136) des Ringsektors befestigt ist.

6. Außenmantel nach Anspruch 5, **dadurch gekennzeichnet, dass** das Blech (150) eine Dicke bzw. eine radiale Abmessung kleiner als etwa 1 mm hat.

7. Turbine einer Turbomaschine, enthaltend Rotorräder (18), **dadurch gekennzeichnet, dass** zumindest eines dieser Rotorräder von einem Außenmantel nach einem der Ansprüche 1 bis 6 umgeben wird.

8. Turbomaschine, wie etwa Turbostrahltriebwerk oder Turbopropellertriebwerk für Flugzeuge, **dadurch gekennzeichnet, dass** sie eine Turbine (10) nach Anspruch 7 aufweist.
